# EUROPÄISCHE PATENTANMELDUNG

(11) **EP 2 501 079 A1**
(43) Veröffentlichungstag der Anmeldung: **19.09.2012**
(21) Anmeldenummer: 11158176.5
(22) Anmeldetag: 15.03.2011
(51) Int. Cl.: H04L 12/40, H04L 12/403

(54) **Verfahren zur Echtzeit-Datenübertragung in einem Kommunikations-Netz**

(71) Anmelder: SIEMENS AKTIENGESELLSCHAFT, 80333 München (DE)
(72) Erfinder: Steindl, Günter, 92284, Poppenricht (DE)

(57) **Zusammenfassung**

Die vorliegende Erfindung betrifft ein Verfahren zur Echtzeit-Datenübertragung in einem Kommunikations-Netz (100, 102, 104), insbesondere einem Feldbus-Netz (100, 102, 104), zur Übertragung von Nutzdaten von einem Sender (110, 112, 114) zu mehreren Empfängern (120, 130, 140),
wobei die Empfänger (120, 130, 140) über ein Synchronisierungs-Verfahren zeitsynchronisiert sind,
wobei im Rahmen der Echtzeit-Datenübertragung mindestens ein Übertragungszeitpunkt (162) für jeweils eine Nutzdaten-Nachricht (150) an die Empfänger (120, 130, 140) festgelegt ist,
wobei jedem der Empfänger (120, 130, 140) ein dem Empfänger (120, 130, 140) zugeordneter eigener Empfänger-Nutzdatenbereich (154, 156, 158) innerhalb der Nutzdaten-Nachricht (150) zugeordnet ist, und
wobei der Sender (110, 112, 114) eine Nutzdaten-Nachricht (150) absendet,
ein erster der Empfänger (120) diese Nutzdaten-Nachricht (150) empfängt, die in dem ihm zugeordneten Empfänger-Nutzdatenbereich (154) enthaltenen Nutzdaten zur weiteren Verarbeitung speichert und die Nutzdaten-Nachricht (150) am Übertragungszeitpunkt (162) an einen zweiten der Empfänger (130) weiterleitet.

## Beschreibung

Die vorliegende Erfindung betrifft ein Verfahren zur Echtzeit-Datenübertragung in einem Kommunikations-Netz, insbesondere einem Feldbus-Netz, zur Übertragung von Nutzdaten von einem Sender zu mehreren Empfängern.

Derartige Verfahren sind aus dem Stand der Technik bekannt. So offenbaren beispielsweise die Offenlegungsschriften DE 10058524 A1 und DE 10234149 A1 Verfahren zur Echtzeitdatenübertragung in einem Automatisierungsnetzwerk, wobei unter anderem beispielsweise ein so genanntes "isochrones Real-Time-Fast-Ethernet (IRTE)" Verfahren offenbart ist, bei welchem über einen relativ komplexen Organisations-Vorgang innerhalb eines IRT-Zeitbereichs Echtzeitdaten zyklisch in dem Kommunikationssystem bzw. Automatisierungsnetz ausgetauscht werden können. Es ist ein Nachteil derartiger Systeme, dass der Organisationsaufwand zur Vorbereitung der Kommunikation und/oder beim Ablauf der Kommunikation zur Steuerung der einzelnen Nachrichten zu den verschiedenen Kommunikationspartnern sehr aufwändig ist.

Daher ist es eine Aufgabe der vorliegenden Erfindung, ein Verfahren zur Echtzeit-Datenübertragung in einem Kommunikations-Netz zur Verfügung zu stellen, welches eine Echtzeit-Datenübertragung mit einfacherem und/oder geringerem Organisationsaufwand möglich macht.

Diese Aufgabe wird gelöst von einem Verfahren zur Echtzeit-Datenübertragung mit den Merkmalen des Patentanspruchs 1.

Bei einem solchen Verfahren zur Echtzeit-Datenübertragung in einem Kommunikations-Netz, insbesondere einem Feldbus-Netz, zur Übertragung von Nutzdaten von einem Sender zu mehreren Empfängern, sind die Empfänger über ein Synchronisierungs-Verfahren zeitsynchronisiert,
- wobei im Rahmen der Echtzeitdatenübertragung mindestens ein Übertragungszeitpunkt für jeweils eine Nutzdaten-Nachricht an die Empfänger festgelegt ist,
- wobei jedem der Empfänger ein dem Empfänger zugeordneter eigener Empfänger-Nutzdatenbereich innerhalb der Nutzdaten-Nachricht zugeordnet ist und
- wobei der Sender eine Nutzdaten-Nachricht absendet, ein erster der Empfänger diese Nutzdaten-Nachricht empfängt, die in dem ihm zugeordneten Empfänger-Nutzdatenbereich enthaltene Nutzdaten zur weiteren Verarbeitung speichert und die Nutzdaten-Nachricht an dem Übertragungszeitpunkt an einen zweiten der Empfänger weiterleitet.

Dadurch, dass bei dem beschriebenen Verfahren eine Nutzdaten-Nachricht mehreren Empfänger zugeordnet ist, welche Daten für jeden dieser Empfänger enthält bzw. enthalten kann, lässt sich der Organisations- oder Betriebsaufwand für eine derartige Echtzeit-Datenübertragung gegenüber den bisherigen Verfahren verringern, da die Nachrichtensteuerung nur für eine Nachricht erfolgen muss und nicht für jeden der Empfänger eine eigene Nachricht vorgesehen und damit organisiert und gesteuert werden muss. Auf diese Weise lässt sich der Organisationsaufwand und/oder der Zeitsteuerungsaufwand sowie gegebenenfalls auch der gesamte Kommunikationsaufwand reduzieren und vereinfachen.

Ein Kommunikations-Netz kann beispielsweise als Telekommunikationsnetz oder auch Daten-Kommunikations-Netz oder auch Steuerungsnetz oder Automatisierungsnetz ausgebildet und ausgestaltet sein. Beispielsweise kann ein Kommunikations-Netz als ein Feldbus-Kommunikations-Netz oder/und ein Automatisierungs-Kommunikations-Netz ausgebildet und ausgestaltet sein. Ein solches Feldbus-Kommunikations-Netz oder Feldbus-Netz kann z.B. allgemein zur Kommunikation einer Steuerungseinheit bzw. eines Automatisierungs-Controllers oder einer vergleichbaren Einheit mit entsprechenden Sensoren und/oder Aktoren eines zu steuernden Systems ausgebildet und eingerichtet sein. Solche Feld-Bus-Netze können beispielsweise gemäß dem "Profinet-", "Controller Area Network (CAN)-", "Profibus-", "Modbus-" oder einem vergleichbaren Standard ausgebildet sein.

Die Echtzeit-Datenübertragung kann beispielsweise ein Datenübertragungsverfahren sein, welches zur abgestimmten Kommunikation zwischen zeitsynchronisierten Partnern ausgebildet und ausgestaltet ist. Insbesondere kann bei der Echtzeit-Datenübertragung eine definierte Übertragungszeit bzw. ein bestimmter Übertragungszeitraum festgelegt, garantiert und/oder vorgegeben sein. Im Feldbus- oder Automatisierungsbereich können solche Echtzeit-Datenübertragungsverfahren beispielsweise als ",Profinet IRT","EtherCAT", ",SERCOS III", "ETHERNET Powerlink", "Modbus/TCP", "Profinet I0", Ethernet/IP" oder ein ähnliches Echtzeit-Datenübertragungsverfahren ausgebildet und/oder eingerichtet sein.

Der Sender und die Empfänger können beispielsweise jeweils beliebige Teilnehmer eines Kommunikations-Netzes, insbesondere eines Feldbus-Netzes sein. So können diese beispielsweise als Automatisierungs-Steuerungseinheit, als Vermittlungseinheit, beispielsweise in einem verteilten Automatisierungsnetz, als Modul eines modularen Steuerungsgeräts, als entsprechende zu steuernde Maschine oder entsprechendes zu steuerndes Gerät, als Sensor, Antrieb oder Aktor oder auch eine beliebige Kombination davon ausgebildet und eingerichtet sein. Insbesondere kann ein Sender beispielsweise als Steuerungseinheit oder Steuerungsvermittlungs-Einheit oder beispielsweise als ein Feldbus-Controller (z. B. beim "Profinet IO- oder IRT-Verfahren als IO-Controller") ausgebildet und eingerichtet sein. Die Empfänger können beispielsweise als so genanntes Feldbus-Device (z. B. "Profinet IO- oder IRT-Verfahren" als ",I0-Device") oder auch vergleichbare Module oder Geräte im Feldbus- und/oder Automatisierungsnetz ausgebildet und ausgestaltet sein.

Das Verfahren zur Echtzeit-Datenübertragung ist zur Übertragung von Nutzdaten an mindestens zwei oder auch mehrere Empfänger, beispielsweise mehr als 3, 5 oder 10 Empfänger ausgebildet und eingerichtet.

Das Synchronisierungs-Verfahren zur Zeitsynchronisierung der Empfänger kann beispielsweise gemäß einem der gängigen Zeitsynchronisierungsverfahren erfolgen. Solche Verfahren können z. B. gemäß dem "Precision Transparent Clock Protocoll (PTCP)" gemäß IEC 611558 oder auch dem "Precision Time Protocoll (PTP)" gemäß IEEE 1588 oder einem vergleichbaren Verfahren ausgebildet und ausgestaltet sein. Die Zeitsynchronisierung kann dabei vom Sender und/oder mindestens einem der Empfänger gesteuert und organisiert werden. Dabei kann z.B. mindestens eine der genannten Komponenten beispielsweise als "Master" für die Zeitsynchronisierung dienen.

Ein Übertragungszeitpunkt kann beispielsweise als absolut oder relativ festgelegter Zeitpunkt definiert sein. Dabei können bei mehreren Geräten diese z.B. alle auf einem absoluten Maßstab einen gleichen Zeitpunkt definiert haben. Weiterhin kann ein Übertragungszeitpunkt bei verschiedenen Geräten jeweils bei einer auf einer absoluten Zeitskala unterschiedlichen Zeit liegen, wobei die Zeitdifferenzen beispielsweise durch Nachrichtenlauf- oder Verarbeitungszeiten gegeben sein können.

Ein Übertragungszeitpunkt kann auch als entsprechender, wie oben beschriebener Zeitpunkt inklusive einer Genauigkeits-oder Toleranzzeitspanne definiert sein oder werden. Solch eine Genauigkeits- oder Toleranzzeitspanne kann beispielsweise technisch durch Laufzeiten und/oder Genauigkeiten einzelner Komponenten oder des Gesamtgeräts bzw. mehrerer Geräte bestimmt sein. Beispielsweise kann ein solcher Genauigkeitszeitraum für einen Übertragungszeitpunkt kleiner oder gleich mit einer Mikrosekunde, 10 Mikrosekunden, 100 Mikrosekunden oder auch kleiner oder gleich 1 Millisekunde, 10 Millisekunden oder auch 100 Millisekunden sein. Eine solche ToleranzZeitspanne oder Genauigkeit des Übertragungszeitpunkts beträgt beispielsweise beim oben genannten ,,Profinet IO nach dem IRT-Verfahren" kleiner oder gleich einer Mikrosekunde.

Es können ein oder auch mehrere Übertragungszeitpunkte festgelegt sein. Bei mehreren Übertragungszeitpunkten kann beispielsweise der Zeitpunkt jeweils flexibel neu festgelegt werden. Weiterhin können mehrere Übertragungszeitpunkte auch im Voraus festgelegt und abgestimmt werden. Insbesondere können mehrere Übertragungszeitpunkte in vorher festgelegten unregelmäßigen oder regelmäßigen oder auch periodischen Zeitabständen aufeinander folgen.

Zu dem bzw. jedem der Übertragungszeitpunkte kann oder wird dann eine Nutzdaten-Nachricht an die Empfänger versendet, wobei jeweils diese eine Nutzdaten-Nachricht an jeden der mehreren Empfänger gerichtet ist. Dabei kann vorgesehen sein, dass nur dann tatsächlich eine Nutzdaten-Nachricht zu einem bestimmten Übertragungszeitpunkt versendet wird, wenn dann auch entsprechende Daten für mindestens einen der Empfänger vorliegen. Und dass ansonsten zu diesem Übertragungszeitpunkt keine Nutzdaten-Nachricht versendet wird.

Die Übertragungszeitpunkte können beispielsweise vor einem Beginn der Echtzeit-Datenübertragung festgelegt werden. Dazu können diese beispielsweise in einem Projektierungssystem projektiert werden. Dabei kann beispielsweise festgelegt werden, zu welchem Übertragungszeitpunkt bzw. zu welchen regelmäßig oder unregelmäßig aufeinanderfolgenden Übertragungs-zeitpunkten jeweils eine Nachricht an die mehreren Empfänger gesendet wird.

Eine derartige Information über den bzw. die Übertragungszeitpunkte kann beispielsweise vor Beginn der Echtzeit-Datenübertragung oder auch im Rahmen einer Aktualisierungsinformation während der Echtzeit-Datenübertragung im Kommunikations- oder Feldbus-Netz mitgeteilt werden. Diese Information kann z.B. im Rahmen einer oder mehrerer entsprechender Informations- oder Projektierungs-Nachrichten den Kommunikationspartnern im Kommunikations-Netz oder Feldbus-Netz mitgeteilt werden. Eine solche Informations- oder Projektierungs-Nachricht kann z.B. weiterhin auch Informationen über die Empfänger der Nutzdaten-Nachricht oder eine Weiterleitungs- bzw. Übertragungsabfolge der Nutzdaten-Nachricht zu den verschiedenen Empfängern umfassen. Die Informations- bzw. Projektierungs-Nachrichten können beispielsweise ebenfalls im Rahmen der Echtzeit-Datenübertragung oder aber auch im Rahmen von Nicht-Echtzeit-Datenübertragung kommuniziert werden.

Im Rahmen des dargestellten Verfahrens zur Echtzeit-Datenübertragung wird insbesondere zu jedem Übertragungszeitpunkt eine Nachricht, insbesondere genau eine Nachricht an die mehreren Empfänger übertragen. Dabei kann die Nutzdaten-nachricht beispielsweise als Ethernet-Nachricht, insbesondere als Ethernet-Frame oder auch Teil eines Ethernet-Frames ausgebildet und ausgestaltet sein.

Ein einem bestimmter Empfänger zugeordneter Empfänger-Nutzdatenbereich kann beispielsweise ein bestimmter, fest vorgegebener Datenbereich innerhalb der Nutzdaten-Nachricht sein. Dieser kann dem jeweiligen Empfänger beispielsweise als Vorbereitung für die Echtzeit-Datenübertragung mitgeteilt werden, so dass jeder Empfänger bei der Vorbereitung zur Echtzeit-Datenübertragung bzw. einer entsprechenden Aktualisierung erfährt, welcher Bereich innerhalb einer Echtzeit-Nachricht die ihm zugeordneten Daten enthält beziehungsweise enthalten kann.

Dabei kann die Signalisierung an die Empfänger beispielsweise derart erfolgen, dass ein Empfänger mitgeteilt bekommt, in welchem Bereich einer bestimmten Echtzeit-Nachricht für ihn bestimmte Daten zu finden sind. Weiterhin können beispielsweise zudem für diesen Empfänger alle anderen Bereiche dieser Nachricht oder auch alle anderen Nutzdaten-Bereiche in dieser Nachricht als "Lücken" definiert werden. Eine solche Signalisierung beziehungsweise Definition der Nutzdatenbereiche kann beispielsweise im Rahmen einer Profinet-Kommunikation definiert und/oder organisiert sein.

Es kann auch vorgesehen sein, dass ein Empfänger den ihm zugeordneten Nutzdaten-Bereich beispielsweise auch anhand einer speziellen Kennung erkennt.

Generell kann vorgesehen sein, dass jedem der Empfänger ein Nutzdaten-Bereich innerhalb der Nutzdaten-Nachricht zugewiesen ist, unabhängig davon, ob zu jedem der Übertragungszeitpunkt tatsächlich Nutzdaten für diesen Empfänger vorliegen.

Weiterhin kann vorgesehen sein, dass eine Nutzdaten-Nachricht für jeden der mehreren Empfänger Nutzdaten umfasst. Weiterhin kann vorgesehen sein, dass in einer Nutzdaten-Nachricht nur Nutzdaten für einige oder einen der mehreren Empfänger enthalten ist oder auch keine Nutzdaten enthalten sind (z. B. wenn zum Übertragungszeitpunkt beispielsweise keine zu übertragenden Daten vorliegen).

Die Formulierung, dass der erste der Empfänger oder auch ein weiterer der Empfänger die ihm zugeordnete Nutzdaten speichert, umfasst auch den Fall, dass keine Nutzdaten für ihn enthalten sind und er demnach auch nichts speichern muss bzw. speichert oder entsprechend nur Leerinformation speichert.

Die Weiterleitung der Nutzdaten-Nachricht an den zweiten der Empfänger erfolgt insbesondere zum Übertragungszeitpunkt inklusive einer vorstehend bereits beschriebenen Toleranzzeit, die beispielsweise technisch bedingt, gerätebedingt oder auch einstellbar sein kann.

Weiterhin kann auch vorgesehen sein, dass dem Übertragungs-zeitpunkt zudem als zusätzliche Toleranzzeitspanne eine Zeitspanne vor dem Übertragungszeitpunkt zugewiesen ist, innerhalb derer ein Empfangen, Absenden und/oder Weiterleiten der Nutzdaten-Nachricht ebenfalls als zum Übertragungszeitpunkt empfangen, gesendet und/oder weitergeleitet gilt. Auf diese Weise lässt sich beispielsweise das Echtzeit-Datenübertragungsverfahren weiter vereinfachen, da auf diese Weise beispielsweise geringere technische Anforderungen an eine entsprechende Ausrüstung zur Echtzeitkommunikation gestellt werden müssen.

Die Weiterleitung kann zudem außer an den zweiten der Empfänger auch parallel an weitere der Empfänger erfolgen. Weiterhin kann die Weiterleitung der Nachricht derart erfolgen, dass die Nachricht unverändert weitergeleitet wird. Alternativ kann die Nachricht auch entsprechende Änderungen erfahren, beispielsweise einen neuen Adressaten bekommen, einen neuen Absender bekommen und/oder auch beispielsweise eine Änderung bzw. ein Löschen der gespeicherten Nutzdaten und/oder weitere Veränderungen erfahren.

Die Weiterleitung der Nutzdaten-Nachricht vom ersten der Empfänger zum zweiten der Empfänger und ggf. zu weiteren der Empfänger kann beispielsweise in einer vorher festgelegten Reihenfolge erfolgen. Diese Reihenfolge kann beispielsweise durch eine Projektierung und/oder durch eine feste Verkabelung festgelegt sein oder werden. Beispielsweise kann die Weiterleitungsreihenfolge der Nutzdaten-Nachricht zu den Empfängern vorher durch eine Projektierung festgelegt sein, wobei jeder der Empfänger beispielsweise mitgeteilt bekommt, an welchen weiteren Empfänger er eine Nachricht, welche beispielsweise zu einem bestimmten Übertragungszeitpunkt bei ihm eintrifft, weiterleiten soll. Auf diese Weise lässt sich eine Weiterleitungskette fest projektieren, was eine besonders einfache und schnelle Nachrichtenweiterleitung ermöglicht. Die Erkennung einer bestimmten Nachricht bzw. die Zuordnung zu einem bestimmten Weiterleitungs-Port kann beispielsweise anhand des Eintreffens zu einem bestimmten Übertragungszeitpunkt bzw. innerhalb einer dieser zugeordneter Toleranzzeitspanne gemäß der vorliegenden Beschreibung und/oder auch anhand beispielsweise einer Nachrichtenkennung, eines Absenders, einer Adresse, einer ID oder Ähnlichem erfolgen.

Das vorstehend beschriebene Verfahren hat weiterhin den Vorteil, dass der Sender nicht zwangsläufig mit den Empfängern zeitsynchronisiert sein muss, sondern beispielsweise eine Nachricht an die Empfänger auch zu einem beliebigen Zeitpunkt abgesendet werden kann, z.B. wenn die oben genannte Toleranzzeitspanne für einen Empfang der Nachricht entsprechend groß gewählt wird. Durch das erfindungsgemäße Verfahren wird erreicht, dass der erste der Empfänger dann diese Nutzdaten-Nachricht beispielsweise zum nächstfolgenden Übertragungs-zeitpunkt z.B. mit einer erheblich engeren Toleranzzeitspanne weiterleitet und so quasi in das Echtzeit-Schema "einsynchronisiert".

Auf diese Weise lässt sich eine Nutzdaten-Nachricht zumindest zwischen den Empfängern "in Echtzeit" weiterleiten, ohne dass der Sender technisch überhaupt für eine Echtzeit-Übertragung geeignet sein muss. Beispielsweise kann diesbezüglich vorgesehen sein, dass der Sender eine Nutzdaten-Nachricht innerhalb eines entsprechend sicheren zeitlichen Vorlaufs vor dem nächsten Übertragungszeitpunkt versendet. Durch dieses Verfahren kann dann trotzdem erreicht werden, dass zumindest die Empfänger, beispielsweise Aktoren und/oder Sensoren einer zu steuernde Anlage oder Maschine, trotzdem relativ zueinander zeitsynchronisiert in Echtzeit angesteuert werden. Auf diese Weise lässt sich das Verfahren zur Echtzeitübertragung weiter vereinfachen, da die technischen Anforderungen beispielsweise an die Sendeeinheit, reduziert werden können.

In einer vorteilhaften Ausgestaltung kann auch der Sender mit den Empfängern zeitsynchronisiert sein, wobei der Sender die Nutzdaten-Nachricht beispielsweise zum Übertragungszeitpunkt inklusive eventueller Toleranzzeiten und/oder innerhalb einer der Echtzeit-Übertragung zugeordneten Zeitspanne absenden kann. Dabei kann die Zeitsynchronisierung beispielsweise wiederum gemäß einer der innerhalb der vorliegenden Beschreibung erläuterten Zeitsynchronisierungsverfahren erfolgen. Auch hier kann die Zeitsynchronisierung beispielsweise von mindesten einem der Empfänger oder auch von dem Sender organisiert werden (das heißt: Die jeweilige Einheit ist beispielsweise ,,Master" für die Zeitsynchronisierung).

Die der Echtzeit-Übertragung zugeordnete Zeitspanne kann beispielsweise dem Übertragungszeitpunkt, gegebenenfalls inklusive einer in der vorliegenden Beschreibung bereits erläuterten Toleranzzeit entsprechen. Weiterhin kann die der Echtzeit-Übertragung zugeordnete Zeitspanne eine entsprechende Zeitspanne vor dem Übertragungszeitpunkt und der entsprechenden Toleranzzeit zugeordnet sein.

Zudem kann vorgesehen sein, dass dem Übertragungszeitpunkt zugeordnete Toleranzzeitspannen beim Sender und den Empfängern unterschiedlich sind. So können z.B. Toleranzzeitspannen beim Sender größer sein als bei den Empfängern. Auf diese Weise kann beispielsweise erreicht werden, dass der Sender mit einem ,,entspannteren" zeitlichen Vorlauf vor dem eigentlichen Übertragungszeitpunkt die Nutzdaten-Nachricht absenden kann, und diese dann trotzdem durch beispielsweise den ersten der Empfänger in das korrekte Weiterleitungsschema zum Übertragungszeitpunkt gemäß der vorliegenden Beschreibung mit entsprechend kleinen Toleranzzeiten "einsynchronisiert" wird. Auf diese Weise ist es möglich, dass beispielsweise der Sender zwar zeitsynchronisiert arbeitet und auch im Rahmen der Echtzeit-Datenübertragung seine Daten versenden kann, aber trotzdem beispielsweise mit technisch geringeren Anforderungen genügen kann. Auf diese Weise lässt sich eine in Datenübertragung mit dem beschriebenen Verfahren mit einfacheren Mitteln und daher auch einfacher, erreichen.

Weiterhin kann die der Echtzeit-Übertragung zugeordnete Zeitspanne auch um den Übertragungszeitpunkt herum oder auch nach dem Übertragungszeitpunkt, gegebenenfalls inklusive eventueller Toleranzzeiten, vorgesehen sein.

In einer vorteilhaften Ausgestaltung kann jeder der Empfänger die Nutzdaten-Nachricht empfangen, die in den ihm zugeordneten Empfänger-Nutzdatenbereich enthaltenen Nutzdaten zur weiteren Verarbeitung speichern, und die Nutzdaten-Nachricht gegebenenfalls an einen weiteren der Empfänger weiterleiten.

Die Empfangsreihenfolge der Nutzdaten-Nachricht durch die Empfänger kann wie beispielsweise in der vorliegenden Beschreibung bereits erläutert erfolgen. So kann diese beispielsweise durch eine Projektierung und/oder beispielsweise durch Verkabelung entsprechend fest vorgegeben sein. Weiterhin kann als Vorbereitung zur Echtzeit-Datenübertragung, bzw. innerhalb einer entsprechenden Aktualisierung, jeder der Empfänger eine Information darüber erhalten, wem er eine bestimmte Echtzeit-Nutzdaten-Nachricht, beispielsweise definiert durch einen bestimmten Übertragungszeitpunkt, weiterleiten soll, z.B. an welchem seiner Ports er diese ausgeben soll.

Auch hier kann vorgesehen sein, dass ein Empfänger, wenn der ihm zugeordnete Empfänger-Nutzdatenbereich keine Nutzdaten für ihn enthält, entweder nichts speichert oder entsprechend eine Leer-Information abspeichert. Zudem kann vorgesehen sein, dass ein Empfänger die Nachricht nicht weiterleitet, wenn kein weiterer Empfänger zum Empfang der Nutzdaten-Nachricht vorgesehen und/oder projektiert ist.

Die Weiterleitung der Nutzdaten-Nachricht kann parallel auch an mehrere Empfänger vorgesehen sein.

Es kann weiterhin vorgesehen sein, dass mindestens einer der Empfänger, der erste Empfänger oder auch alle der Empfänger, einen Empfangszeitpunkt der Nutzdaten-Nachricht bei sich mit dem mindestens einen Übertragungszeitpunkt vergleicht und abhängig vom Ergebnis dieses Vergleichs die in dem ihm zugeordneten Empfänger-Nutzdatenbereich enthaltenen Nutzdaten zur weiteren Verarbeitung speichert. Auf diese Weise kann beispielsweise vorgesehen sein, dass der Empfänger eine bestimmte Nutzdaten-Nachricht daran erkennt, dass sie zum Übertragungszeitpunkt oder einem entsprechenden, diesem zugeordneten Toleranzzeitraum, bei ihm eintrifft.

So kann vorgesehen sein, dass der Empfänger, beziehungsweise die Empfänger, die in dem ihm zugeordneten Empfänger-Nutzdatenbereich der Nutzdaten-Nachricht gespeicherten Nutzdaten dann speichert, wenn die Abweichung des Empfangszeitpunkts zum Übertragungszeitpunkt innerhalb einer bestimmten, vorgegebenen Zeitspanne liegt, die beispielsweise der in der vorliegenden Beschreibung ausgeführten Toleranzzeit entsprechen kann. Im Rahmen des Vergleichs des Empfangszeitpunkts mit dem Übertragungszeitpunkt können weiterhin auch Laufzeiten und/oder interne Bearbeitungszeiten eine Berücksichtigung finden.

Diese Ausgestaltung hat den Vorteil, dass eine bestimme Nutzdaten-Nachricht beziehungsweise ein bestimmter Nutzdaten-Nachrichtenzyklus anhand des Empfangszeitpunkts bei einem Empfänger und vorher mitgeteilter Übertragungszeitpunkte, identifiziert werden kann und dann beispielsweise einem bestimmten Echtzeit-Übertragungsschema zugeordnet wird.

Wird ein entsprechendes Echtzeit-Schema beispielsweise durch eine Abfolge von Übertragungszeitpunkten definiert, z.B. eine periodische oder aperiodische Abfolge, so erfolgt vorteilhafter Weise der Vergleich des Empfangszeitpunkts mit dem Übertragungszeitpunkt mit dem innerhalb dieser Abfolge nächstfolgenden und ggf. noch mit dem letzten vorausgehenden Übertragungszeitpunkt. Liegt dann der Empfangszeitpunkt innerhalb des vorgegebenen Toleranzbereichs um den Übertragungszeitpunkt herum und/oder vor dem entsprechenden Übertragungszeitpunkt, so wird die Nutzdaten-Nachricht dem definierten Echtzeit-Übertragungsschema zugeordnet und die enthaltenen Informationen entsprechend verarbeitet und weitergeleitet. Liegt der Empfangszeitpunkt außerhalb eines solchen Zeitbereichs, so wird die Nutzdaten-Nachricht entsprechend eines anderen Übertragungs- oder Kommunikationsschemas behandelt oder z.B. auch verworfen.

In einer weiteren Ausgestaltung kann vorgesehen sein, dass der erste Empfänger einen Empfangszeitpunkt einer Nutzdaten-Nachricht bei sich mit dem mindestens einem Übertragungszeitpunkt vergleicht und abhängig vom Ergebnis dieses Vergleichs die in dem ihm zugeordneten Empfänger-Nutzdatenbereich enthaltenen Nutzdaten zur weiteren Verarbeitung speichert und die Nutzdaten-Nachricht am Übertragungszeitpunkt an den zweiten der Empfänger weiterleitet.

Der erste Empfänger kann dabei beispielsweise derart ausgestaltet sein, dass innerhalb des Vergleichsvorgangs Nutzdaten-Nachrichten innerhalb eines größeren Toleranzzeitraums um und/oder vor dem Übertragungszeitpunkt als dem Echtzeit-Übertragungsverfahren zugehörig erkannt werden und dann aber zum Übertragungszeitpunkt, z.B. inklusive einer dann kleineren Toleranzzeit, an den zweiten der Empfänger weitergeleitet wird. Auf diese Weise kann der erste Empfänger eine beispielsweise mit einem gewissen Vorlauf zum Übertragungszeitpunkt gesendete Nutzdaten-Nachricht in den eigentlichen Übertragungszeitpunkt-Zyklus "einsynchronisieren" und so innerhalb der Empfänger-Kette eine korrekte und genaue Echtzeit-Übertragung erreichen.

Ein so ausgestalteter erster Empfänger ist beispielsweise in der Lage, auch Nutzdaten-Nachricht im Rahmen einer Echtzeit-Übertragung von Sendern korrekt zu verarbeiten, die geringere technische Fähigkeiten haben und daher nicht in der Lage sind, einen sehr genauen Übertragungszeitpunkt beziehungsweise eine entsprechend enge Übertragungszeitpunkts-Toleranz einzuhalten.

Weiterhin kann vorgesehen sein, dass mehrere der Empfänger beziehungsweise alle der Empfänger so ausgestaltet sind, wie vorstehend in Bezug auf den ersten Empfänger erläutert. Die Empfänger können dann also beispielsweise Nutzdaten-Nachrichten, die zum Übertragungszeitpunkt und einer entsprechenden Toleranzzeit sowie auch die, die innerhalb eines entsprechenden zeitlichen Vorlaufs vor dem Übertragungszeitpunkt bei ihm eintreffen, als einem bestimmten Echtzeit-Übertragungsschema zugehörig erkennen, entsprechen für den jeweiligen Empfänger vorgesehene Nutzdaten daraus entnehmen und die Nutzdaten-Nachricht beispielsweise gemäß einem vorgegebenen Weiterleitungsschema (z.B. an einem bestimmten vorgesehenen Port) am Übertragungszeitpunkt beziehungsweise innerhalb der entsprechenden Toleranzzeit, weiterzuleiten.

Weiterhin kann vorgesehen sein, dass mehrere Übertragungszeitpunkte für Nutzdaten-Nachrichten an die Empfänger vorgesehen sind, und die Übertragungszeitpunkte mit regelmäßigen Zeitabständen aufeinanderfolgen. Auf diese Weise kann eine Echtzeit-Übertragungsschema definiert werden, bei welchem sich in regelmäßigen Zeitabständen Echtzeitnachrichten mit vorgegebenen, insbesondere engen, Toleranzzeiten an Empfänger weiterleiten lassen und so zu einer genau abgestimmten Steuerung durch mehrere Empfänger, die beispielsweise als Aktoren oder Sensoren ausgestaltet sein können, erreicht werden. Ein solches Übertragungsschema kann beispielsweise entsprechend Echtzeit-Protokollen, wie z.B. Profinet IO nach dem IRT Verfahren, Ethernet/IP, Modbus/TCP, Ethernet Powerlink, Sercos III und/oder EhterCAT ausgestaltet sein.

Weiterhin kann mindestens eine Vorbereitungs-Nachricht an die Empfänger zum Einrichten der Echtzeit-Datenübertragung vorgesehen sein oder gesendet werden, wobei die mindestens eine Vorbereitungs-Nachricht eine Information zu dem mindestens einen Übertragungs-Zeitpunkt für die Nutzdaten-Nachricht beziehungsweise Nutzdaten-Nachrichten und/oder Informationen über mindestens einen der Empfänger-Nutzdatenbereiche der jeweiligen Empfänger und/oder Informationen über einen oder mehrere Empfänger, an welchen eine entsprechende Nutzdaten-Nachricht weiterzuleiten ist, umfassen.

Insbesondere kann die Vorbereitungsnachricht weiterhin eine Information zu einer dem oder den Übertragungszeitpunkten jeweils zugeordneten Toleranzzeitspanne enthalten, innerhalb welcher eine eintreffende Nachricht noch als Nutzdaten-Nachricht im Rahmen der Echtzeit-Datenübertragung gemäß der vorliegenden Beschreibung erkannt wird.

Mittels einer solchen Vorbereitungs-Nachricht, die beispielsweise von dem Sender, einem der Empfänger oder auch einer entsprechenden Projektierungseinheit erstellt werden kann, lässt sich beispielsweise für die Echtzeit-Übertragung notwendige Information an dem Sender und die Empfänger vermitteln. Eine solche Information kann beispielsweise zum Einrichten der Echtzeit-Übertragung oder auch zum Aktualisieren der Information zur Echtzeitübertragung gesendet werden. Dabei können eine Vorbereitungs-Nachricht oder auch mehrere Vorbereitungs-Nachrichten vorgesehen sein. Eine beziehungsweise mehrere solche Vorbereitungs-Nachrichten können beispielsweise gemäß der Profinet-Norm zum Einrichten von Echtzeitkommunikation (z.B. IRT) ausgebildet und eingerichtet sein.

Die Information zu dem mindestens einen Übertragungszeitpunkt kann beispielsweise den Zeitpunkt oder auch mehrere Zeitpunkte oder auch ein bestimmtes Zeitpunktschema definieren. Dabei kann ein solches Zeitpunktschema beispielsweise die regelmäßige Abfolge von Übertragungs-Zeitpunkten umfassen beziehungsweise entsprechende Parameter zur Berechnung solcher Zeitpunkte enthalten.

Die Information über den mindestens einen der Empfänger-Nutzdatenbreiche für den jeweiligen Empfänger kann beispielsweise eine Information darüber enthalten, innerhalb welches Teils der Nutzdaten-Nachricht sich der Empfänger-Nutzdatenbereich befindet, das heißt beispielsweise, an welcher Stelle dieser beginnt und an welcher Stelle dieser endet oder an welcher Stelle dieser beginnt und wie lange dieser ist. Weiterhin kann die Information über den mindestens einen der Empfänger-Nutzdatenbreiche derart ausgestaltet sein, dass sie die Information enthält, dass im beschriebenen Empfänger-Nutzdatenbereich Daten für ihn enthalten sind und ansonsten nur Lücken innerhalb der Nutzdaten-Nachricht vorliegen.

Es kann weiter vorgesehen sein, dass die Zeitsynchronisation durch einen der Empfänger gesteuert wird. Vorteilhafter Weise wird die Zeitsynchronisation allgemein durch eine Einheit gesteuert, welche innerhalb eines bestimmten Systems die höchste technische Zeit-Genauigkeit besitzt beziehungsweise zur Gruppe der Einrichtungen gehört, welche die technisch höchsten Zeit-Genauigkeiten besitzen. Im vorliegenden Fall kann das System dann so eingerichtet sein, dass an den Sender keine so hohen technischen Anforderungen bezüglich der zeitlichen Genauigkeit gestellt werden müssen und dieser beispielsweise mit einer Standard-Ethernet-Hardware beziehungsweise einer entsprechenden anderen Standard-Kommunikations-Hardware betrieben werden kann. Die für die technische Synchronisation beziehungsweise den Echtzeitbetrieb der Empfänger notwendige Genauigkeit wird nur in den Empfängern verlangt. Da die Empfänger in einem derartigen System eine höhere technische Zeit-Genauigkeit aufweisen als der Sender, kann auch die Zeitsynchronisation in vorteilhafter Weise von einem der Empfänger übernommen werden, der dann auch den beispielsweise den Sender entsprechend Zeit synchronisieren kann.

Es kann zudem vorgesehen sein, dass jedem der mindestens einen Übertragungszeitpunkte ein Echtzeit-Zeitbereich zugeordnet ist, der für die Echtzeit-Datenübertragung vorgesehen ist, wobei weiterhin Datenkommunikation, die nicht Echtzeit-Datenübertragung ist, nur außerhalb dieses mindestens einen Echtzeit-Zeitbereichs erfolgt. Auf diese Weise lässt beispielsweise ein Übertragungsschema organisieren, bei welchem parallel sowohl Echtzeit-Übertragung als auch Nicht-Echtzeit-Übertragung erfolgen kann. In einem solchen Schema würde dann ein Übertragungszeitpunkt gemäß der vorliegenden Beschreibung innerhalb eines solchen Echtzeit-Zeitbereichs liegen. Vorteilhafter Weise kann jeder Echtzeit-Zeitbereich z.B. nur genau einen Übertragungszeitpunkt enthalten. Weiterhin vorteilhafter Weise kann jeder Echtzeit-Zeitbereich genau einen Übertragungszeitpunkt aufweisen.

Die vorstehend genannte Aufgabe wird auch gelöst von einem Sender zur Verwendung in einem Kommunikations-Netz, insbesondere einem Feldbus-Netz, zur Übertragung von Nutzdaten zu mehreren Empfängern,
wobei die Empfänger über ein Synchronisierungsverfahren zeitsynchronisiert sind, und
wobei der Sender eine Steuereinrichtung umfasst, die zum Versenden mindestens einer Nutzdaten-Nachricht gemäß einem Verfahren zur Echtzeit-Datenübertragung gemäß der vorliegenden Beschreibung ausgebildet und eingerichtet ist. Dabei können der Sender, das Kommunikations-Netz, das Feldbus-Netz, die Empfänger, die Zeitsynchronisierung, die Nutzdaten-Nachricht sowie das Versenden beispielsweise gemäß der vorliegenden Beschreibung ausgestaltet sein. Insbesondere kann beispielsweise die Zeitsynchronisierung vom Sender oder auch mindestens einem der Empfänger gesteuert werden. Weiterhin kann auch vorgesehen sein, dass der Sender nicht mit dem Empfänger zeitsynchronisiert ist.

Dadurch, dass eine Nutzdaten-Nachricht für mehrere Empfänger vorgesehen ist, kann ein Echtzeit-Datenübertragungsverfahren zwischen den Empfängern vorgesehen sein, bei welchem gegenüber dem Stand der Technik ein geringerer Organisations- und Synchronisierungsaufwand notwendig wird, da beispielsweise nicht mehr für jeden Empfänger eine eigene Echtzeit-Nachricht zu einem jeweils genau definierten Zeitpunkt gesendet werden muss.

Der Sender kann aber auch über ein Synchronisierungs-Verfahren mit den Empfängern zeitsynchronisiert sein. Dabei kann beispielsweise vorgesehen sein, dass der Sender die Nutzdaten-Nachricht innerhalb einer der Echtzeit-Datenübertragung zugeordneten Zeitspanne absendet. Insbesondere kann vorgesehen sein, dass der Sender die Nutzdaten-Nachricht innerhalb einer vorgegebenen Zeitspanne vor dem Übertragungszeitpunkt absendet. Auf diese Weise ist es möglich, dass der Sender beispielsweise geringere Genauigkeitsanforderungen an mögliche Übertragungszeitpunkte erfüllen muss, als beispielsweise die Empfänger und so beispielsweise auch mit einer Standard-Hardware ausgestattet sein kann, auch wenn eine entsprechende Spezialhardware beispielsweise bei den Empfängern notwendig ist, um beispielsweise eine notwendige Zeitgenauigkeit für eine Echtzeit-Datenübertragung und/oder entsprechende Synchronität (z.B. bei mehreren zusammen arbeitenden Motoren oder Antrieben) zu erhalten.

Weiterhin kann vorgesehen sein, dass der Sender die Nutzdaten-Nachricht zum Übertragungszeitpunkt, ggf. unter Berücksichtigung einer entsprechenden, beispielsweise technisch bedingten Toleranzzeit absendet. Ein solches Verfahren kann beispielsweise in einem System vorgesehen sein, wo Sender und Empfänger die gleichen, für eine korrekte Echtzeit-Datenübertragung notwendigen, Hardware-Voraussetzungen erfüllen. Dabei kann dann z.B. eine Toleranzzeit für den Übertragungszeit bei Sender und den Empfänger gleich oder im Wesentlichen gleich sein.

Weiterhin kann der Sender, der beispielsweise als ein Kommunikations-Controller ausgebildet sein kann, zum Versenden einer oder mehrerer Vorbereitungs-Nachrichten an die Empfänger zum Einrichten oder Aktualisieren der Echtzeit-Datenübertragung eingerichtet und ausgebildet sein, wobei die eine oder mehreren Vorbereitungs-Nachrichten
- eine Information zu dem mindestens einen Übertragungs-Zeitpunkt für die Nutzdaten-Nachrichten umfasst und/oder
- Informationen über mindestens einen der Empfänger-Nutzdatenbereiche der jeweiligen Empfänger umfasst und/oder
- Informationen über eine Weiterleitung der entsprechenden Nutzdaten-Nachrichten umfasst und/oder
- Informationen über einen Toleranzzeitraum für die Übertragungszeitpunkte, innerhalb dessen beim Empfang einer Nachricht diese als Nutzdaten-Nachricht gemäß der vorliegenden Beschreibung erkannt wird, umfasst.

Insbesondere kann die eine oder mehrere Vorbereitungsnachricht gemäß der vorliegenden Beschreibung ausgestaltet sein.

Die vorstehende Aufgabe wird auch gelöst von einem Empfänger zur Verwendung in einem Kommunikations-Netz, insbesondere einem Feldbus-Netz, zum Empfang von Nutzdaten von einem Sender und zur Weiterleitung der Nutzdaten an einen weiteren Empfänger, wobei die Empfänger über ein Synchronisierungsverfahren zeitsynchronisiert sind, wobei der Empfänger eine Steuer- und Speichereinrichtung umfasst, die zum Empfangen, Verarbeiten und Weiterleiten mindestens einer Nutzdaten-Nachricht von dem Sender oder einem anderen der Empfänger gemäß einem Verfahren zur Echtzeit-Datenübertragung gemäß der vorliegenden Beschreibung ausgebildet und eingerichtet ist. Dabei können wiederum Empfänger, Sender, Kommunikations-Netz, Feldbus-Netz, Nutzdaten-Nachricht, das Synchronisierungsverfahren zur Zeitsynchronisierung sowie das Verarbeiten und Weiterleiten der mindestens einer Nutzdaten-Nachricht gemäß der vorliegenden Beschreibung ausgebildet und eingerichtet sein.

Ein solcher Empfänger ermöglicht ebenfalls eine einfachere Echtzeit-Kommunikation, da er in der Lage ist, mittels einer einzigen Nachricht Echtzeit-Informationen an einen oder mehrere Empfänger weiterzuleiten und so eine synchronisierte Echtzeit-Kommunikation mit verringerten Organisations- und Synchronisationsaufwand zu realisieren.

Dabei kann der Empfänger oder die Steuer- und Speichereinrichtung des Empfängers zum Empfang der Nutzdaten-Nachricht von dem Sender,
zur Speicherung der in dem ihm zugeordneten Empfänger-Nutzdatenbereich enthaltenen Nutzdaten, und
zur Weiterleitung der Nutzdaten-Nachricht am Übertragungs-zeitpunkt an einen weiteren der Empfänger ausgebildet und eingerichtet sein.

Auf diese Weise kann der Empfänger entweder ein zum Übertragungszeitpunkt, eventuell inklusive einer entsprechenden Toleranzzeit, ankommendes Datenpaket, ein mit einem entsprechenden Vorlauf vor dem Übertragungszeitpunkt kommendes Datenpaket oder sogar ein unsynchronisiert vor dem Übertragungszeitpunkt ankommendes Datenpaket auf in der vorliegenden Beschreibung erläuterte Weise der Echtzeit-Datenübertragung zugehörig erkennen und zum Übertragungszeitpunkt weiterleiten, also quasi in den korrekten Echtzeitrhythmus "einsynchronisieren". Dies ermöglicht eine sehr flexible Verwendung solcher Empfänger in einem Kommunikations-Netz, insbesondere in einem Automatisierungs- oder Feldbus-Netzwerk. Dabei können der Empfang, sowie das Erkennen der Nutzdaten-Nachricht, die Speicherung der darin enthaltenen Nutzdaten sowie die Weiterleitung der Nutzdaten-Nachricht zum Übertragungszeitpunkt an einen weiteren der Empfänger gemäß der vorliegenden Beschreibung ausgebildet und ausgestaltet sein.

Die Steuer- und Speichereinrichtung bzw. der Empfänger kann weiterhin eine Vergleichseinrichtung zum Vergleich eines Empfangszeitpunkts der Nutzdaten-Nachricht bei sich mit dem mindestens einen Übertragungszeitpunkt umfassen, wobei die Steuer- und Speichereinrichtung bzw. der Empfänger weiterhin zur Speicherung der in dem ihm zugeordneten Empfänger- Nutzdaten-bereich enthaltenen Nutzdaten abhängig vom Ergebnis dieses Vergleichs ausgebildet ist. Dabei kann die Vergleichseinrichtung so ausgebildet sein, dass die Nutzdaten-Nachricht beispielsweise daran erkannt werden kann, dass der Empfangszeitpunkt zum Übertragungszeitpunkt im Bereich einer Toleranzzeit des Übertragungszeitpunkts oder auch innerhalb eines definierten Vorlaufs zum Übertragungszeitpunkt erfolgt. Bei mehreren Übertragungszeitpunkten kann beispielsweise der auf den Empfang nächstfolgende und/oder auch der letzt-vorhergehende Übertragungszeitpunkt für den Vergleich herangezogen werden.

Der Vergleich bzw. die Vergleichseinrichtung kann dabei weiterhin gemäß der vorliegenden Beschreibung ausgestaltet oder ausgebildet sein.

Wird die Nutzdaten-Nachricht dann entsprechend als eine bestimmte Echtzeit-Nachricht erkannt, so kennt der Empfänger beispielsweise den Bereich innerhalb der Nutzdaten-Nachricht, welche Informationen für ihn enthält bzw. enthalten kann und speichert diese Information gegebenenfalls, falls vorhanden. Enthält eine Nutzdaten-Nachricht keine Information für diesen Empfänger, so wird auch nichts gespeichert bzw. eine Leer-Information gespeichert.

Weiterhin kann vorgesehen sein, dass abhängig vom Ergebnis des genannten Vergleichs die Nutzdaten-Nachricht an einen weiteren der Empfänger, falls vorgesehen, weitergeleitet wird. Dabei kann insbesondere vorgesehen sein, dass, wenn der genannte Vergleich ergibt, dass die Nutzdaten-Nachricht der Echtzeit-Datenübertragung zum Übertragungszeitpunkt zugeordnet ist, diese Nutzdaten-Nachricht zum Übertragungszeitpunkt an den weiteren Empfänger weitergeleitet wird.

Solche eine Vergleichseinrichtung ermöglicht ein einfaches, effizientes und sehr flexibles Kommunikations-Schema zur Echtzeit-Datenübertragung, da über diese Ausgestaltung der Vergleichseinrichtung sowohl gemäß dem festgelegten Echtzeit-Übertragungs-Schema (incl. Eventueller Toleranzzeiten) eintreffende Nutzdaten-Nachrichten als auch mit einem gewissen höheren Toleranzbereich eintreffende Nachrichten korrekt erkannt und auch gemäß dem Korrekten Echtzeit-Datenübertragungs-Verfahren zum Übertragungszeitpunkt weitergeleitet werden können. Auf diese Weise ist eine Kombination von Sendern und Empfängern mit verschiedenen Hardware-Eigenschaften möglich, insbesondere eine Kombination eines Senders mit geringeren Genauigkeitsanforderungen mit Empfängern, die hohe Anforderungen an Zeit und Synchronisiergenauigkeit erfüllen.

Weiterhin kann der Empfänger eine Zeitsynchronisations-Steuereinheit umfassen, welche zur Zeitsynchronisation der Empfänger oder der Empfänger und des Senders eingerichtet und ausgebildet ist. Auf diese Weise kann ein Empfänger, der hohen technischen Anforderungen an Genauigkeit und Synchronisation genügt, zur Zeitsynchronisierung eines Systems aus Sendern und Empfängern verwendet werden, bei welchen nicht alle Komponenten, z. B. nicht der Sender und/oder auch einzelne der Empfänger, den gleich hohen technischen Anforderungen an zeitliche Genauigkeit und Präzision genügen.

Die Bezeichnung ,,Sender" und ,,Empfänger" in der vorliegenden Beschreibung bezieht sich dabei auf die Übertragung der Nutzdaten-Nachricht gemäß der vorliegenden Beschreibung. Hierbei geht diese Nutzdaten-Nachricht vom Sender aus und wird von den Empfängern empfangen und gegebenenfalls weitergeleitet. Im Rahmen der Echtzeit-Übertragung und auch der allgemeinen Kommunikation können natürlich als ,,Sender" bzw. ,,Empfänger" gemäß der vorliegenden Beschreibung ausgebildete Geräte auch die jeweils andere Rolle übernehmen. Das heißt, ein Empfänger-Gerät kann zu einem anderen Zeitpunkt bzw. Übertragungszeitpunkt z.B. auch als Sender für eine Nutzdaten-Nachricht agieren und z.B. auch der Sender als Empfänger oder einer der Empfänger.

Weitere vorteilhafte Ausgestaltungen ergeben sich aus den Unteransprüchen.

Im Folgenden wird die vorliegende Erfindung beispielhaft mit Bezug auf die beiliegenden Figuren näher erläutert.

Es zeigen:
Fig. 1: Beispielhaftes Feldbusnetz;
Fig. 2: Ein erstes Nachrichten-Zeitschema innerhalb des Feldbusnetzes gemäß Fig. 1;
Fig. 3: Ein zweites Zeitschema für ein Automatisierungsnetz mit einem alternativen Controller;
Fig. 4: Ein drittes Zeitschema für eine zweite Ausgestaltung des Controllers.

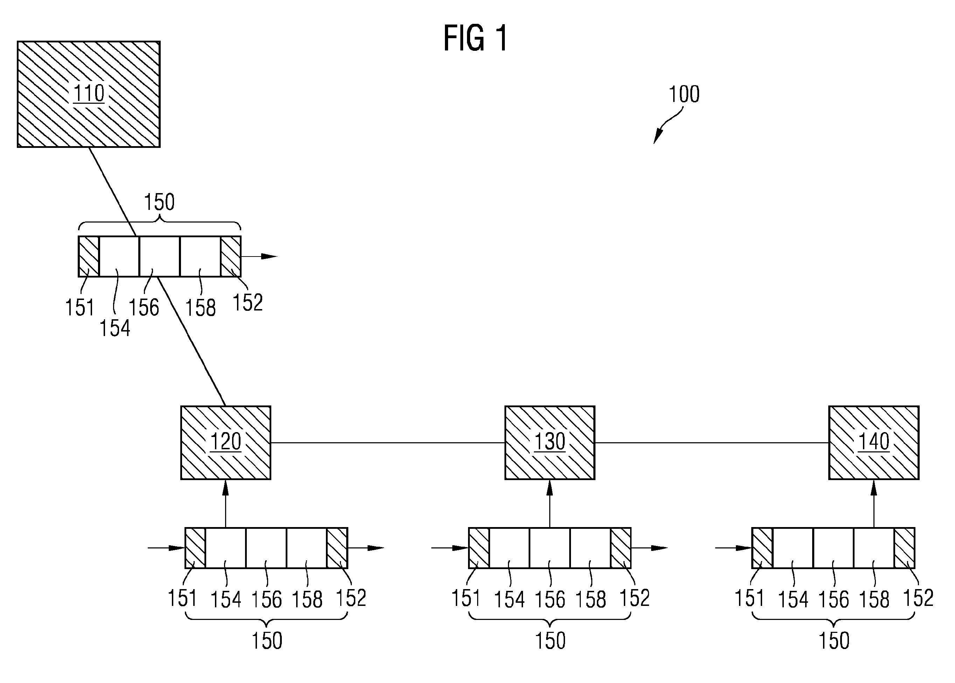

Fig. 1 zeigt ein Kommunikationsnetz 100, welches als Feldbus 100 gemäß dem Profinet-Standard ausgebildet ist und innerhalb welchen Profinet IO zur Echtzeit- und Nicht-Echtzeit-Kommunikation eingesetzt wird. Die nachfolgende Beschreibung bezieht sich auf die Verwendung des Profinet-Standards, lässt sich aber sinngemäß beispielsweise einfach auf weitere, insbesondere Echtzeit fähige Feldbusstandards wie z.B. Ethernet/IP, Modbus/TCP, Ethernet Powerlink, Sercos III oder EtherCAT übertragen. Das im Feldbusnetz 100 verwendete Profinet IO weist dabei unter Anderem auch die Kommunikation gemäß dem ,,Isochronous Real Time (IRT)"-Verfahren auf.

Das Feldbusnetz 100 umfasst einen IO-Controller 110, der ein Beispiel für einen Sender gemäß der vorliegenden Beschreibung darstellt sowie drei IO-Devices 120, 130, 140, welche Beispiele für Empfänger gemäß der vorliegenden Beschreibung darstellen. Der IO-Controller 110 sowie die IO-Devices 120, 130, 140, sind über entsprechende Ethernetleitungen zu einer Reihe verbunden. Im Feldbusnetz 100 ist ein Echtzeit-Übertragungsverfahren implementiert, bei welchem beispielsweise eine Echtzeit-Nachricht 150 zu einem vorgegebenen Übertragungszeitpunkt vom IO-Controller 110 zum ersten IO-Device 120 und von diesem weiter zum zweiten IO-Device 130 und dann zum dritten IO-Device 140 geleitet wird.

Sowohl der Controller 110, als auch die IO-Devices 120, 130, 140, sind zeitsynchronisiert, beispielsweise gemäß dem "Precision Transparent Clock Protocol (PCTP)" nach IEC 61158. Dabei fungiert das erste IO-Device 120 als Clock-Master für diese Zeitsynchronisation.

Die technische Ausgestaltung des Controllers 110 sowie der Devices 120, 130, 140, entsprechen alle den hohen Anforderungen für eine isochrone Echtzeit-Übertragung, so dass der Controller 110 die Echtzeit-Nachricht 150 zu einem festgelegten Übertragungszeitpunkt absendet. Die Echtzeit-Nachricht 150 umfasst dabei einen Ethernet-Header 152, einen ersten Datenbereich 154, der für das erste IO-Device 120 reserviert ist und Daten für dieses Device enthalten kann, einen zweiten Datenbereich 156, der für das zweite IO-Device reserviert ist und Daten für dieses enthalten kann, sowie einen dritten Datenbereich 158, welcher für das dritte IO-Device 140 reserviert ist und Daten für dieses enthalten kann, sowie weiterhin einen Ethernet Trailer 151.

Das erste IO-Device 120 empfängt die Nachricht 150 zum, beziehungsweise in der Nähe des für die Echtzeit-Übertragung definierten Übertragungszeitpunkts. Durch diesen Empfangszeitpunkt erkennt das erste Device 120, dass es sich um eine bestimmte, vorab definierte Echtzeit-Nachricht 150 handelt, die zum Einen im Datenbereich 154, der dem ersten Device 120 ebenfalls vorher mitgeteilt wurde, Nutzdaten für das erste Device 120 enthalten kann, die zweitens an das zweite IO-Device 130 weiterzuleiten ist, und drittens die an das zweite IO-Device 130 am Übertragungszeitpunkt weiterzuleiten ist. Daraufhin speichert das erste Device 120 die im ersten Bereich 154 der Echtzeit-Nachricht 150 vorhandenen Daten und sendet die Echtzeit-Nachricht 150 zum Übertragungszeitpunkt weiter an das zweite IO-Device 130.

Über das Zeitsynchronisationsverfahren ist dabei gewährleistet, dass entsprechende Lauf- und Verarbeitungszeiten innerhalb der Geräte bei der Zeitsynchronisierung so berücksichtigt werden, dass es jedem der Sender beziehungsweise Empfänger möglicht ist, jeweils immer zum Übertragungszeitpunkt Nachrichten zu versenden.

Im zweiten IO-Device 130 erfolgt wiederum anhand des Eintreff-Zeitpunkts der Echtzeit-Nachricht 150, welche ein Beispiel für eine Nutzdaten-Nachricht gemäß der vorliegenden Beschreibung ist, die Identifikation dieser Nachricht als Echtzeitnachricht, welche zum Übertragungszeitpunkt weiterzuleiten ist und welche im zweiten Datenbereich 156 Nutzdaten für das zweite IO-Device enthalten kann. Nach Speicherung dieser Daten wird dann die Echtzeitnachricht 150 am Übertragungs-zeitpunkt an das dritte IO-Device weitergeleitet. Dort erfolgt die Bearbeitung der Echtzeitnachricht 150 entsprechend der anderen IO-Devices 120, 130, so dass im dritten Datenbereich 158 gespeicherte Informationen im dritten IO-Device 140 gespeichert werden. Die Echtzeitnachricht 150 wird vom dritten IO-Device 140 allerdings nicht mehr weitergeleitet, da keine weiteren Empfänger im Feldbusnetz 100 vorhanden sind. Das dritte IO-Device 140 hatte daher bei der Projektierung der Kommunikation z.B. auch keinen entsprechenden Weiterleitungs-Pfad beziehungsweise -Port genannt bekommen.

Durch das beschriebene Verfahren ist es möglich, mit hoher Echtzeitqualität und nur einer einzigen Nachricht 150, mehrere IO-Devices 120, 130, 140 mit Echtzeitkommunikations-Daten zu versorgen. Da dabei nur eine Nachricht 150 versendet werden muss, können die Anforderungen an die in den Geräten enthaltene Hardware gegebenenfalls geringer ausfallen, als wenn der Sender 110 für jeden der Empfänger 120, 130, 140 eine einzelne Echtzeitnachricht jeweils zu einem unterschiedlichen, aber genau definierten Zeitpunkt verschicken müsste und beispielsweise das erste und zweite IO-Device 120, 130 dann diese Nachrichten, die zum Teil gar nicht für sie gedacht sind, auch noch in Echtzeit weiterleiten müssten.

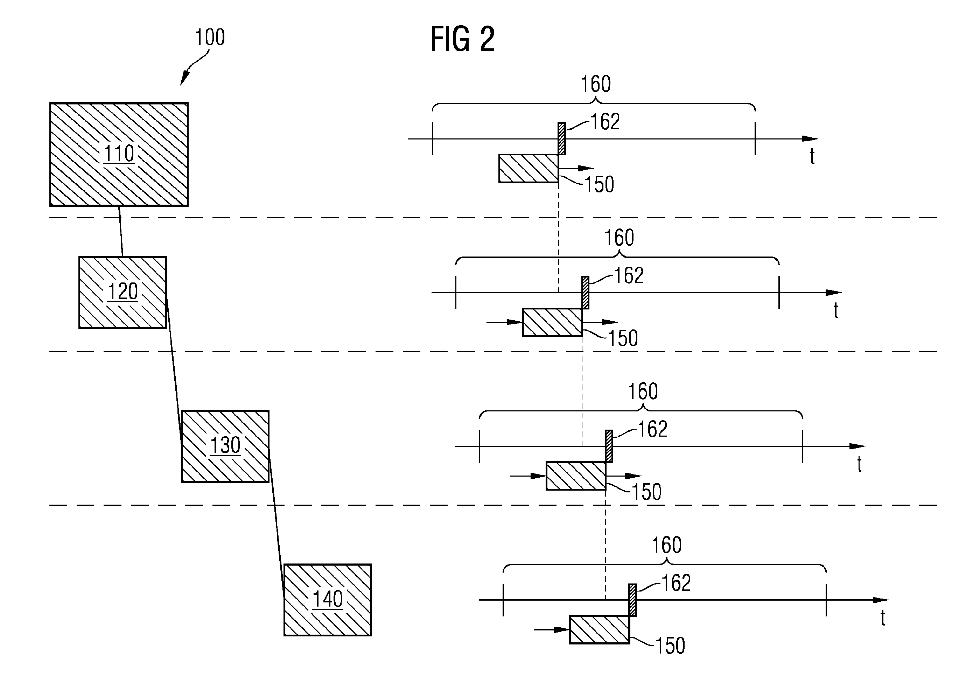

Fig. 2 zeigt ein Zeitschema für das in Fig. 1 dargestellte Feldbusnetz 100, wobei im linken Teil der Zeichnung jeweils der Controller 110 und die Devices 120, 130, 140, dargestellt sind und im jeweils rechten Abschnitt ein dem jeweiligen Gerät zugeordneter Zeitablauf. Dieser Zeitablauf umfasst eine der Echtzeitübertragung zugeordnete Zeitspanne 160, innerhalb welcher ein Übertragungszeitpunkt 162 für die Echtzeitübertragung der vordefinierten Echtzeitnachricht 150 definiert ist. Dabei entspricht die Vorderkante der Echtzeitnachricht 150 in Figur 2 dem Versendezeitpunkt der Nachricht im jeweils links dargestellten Device 110, 120, 130, 140.

Wie in Fig. 2 dargestellt, wird durch die Zeitsynchronisation erreicht, dass auf einem absoluten Zeitmaßstab gesehen die Übertragungszeitpunkte in den verschiedenen Devices 110, 120, 130, 140 zeitlich versetzt ist, wobei der zeitliche Versatz internen Verarbeitungs- und Laufzeit sowie Laufzeiten über Verbindungsleitungen entspricht. Damit wird erreicht, dass die zum Übertragungszeitpunkt 162 beim Controller 110 abgesendete Echtzeitnachricht 150 trotz Laufzeiten und Verarbeitungszeiten wiederum zum Übertragungszeitpunkt 162 beim ersten IO-Device 120 weitergeleitet werden kann. Ein entsprechender Versatz führt dann auch zu einer korrekten Weiterleitung zum zweiten und dritten IO-Device 130, 140. Dieser Versatz kann beispielsweise durch bereits entsprechend zeitversetzt laufende Uhren in den einzelnen Geräten oder auch durch synchrone Uhren aber entsprechende Korrekturwerte bei der Berechnung von Zeitpunkten erreicht werden.

Im Rahmen der Beschreibung der Fig. 1 und 2 wurde jeweils von einer Echtzeitnachricht 150, einem Übertragungszeitpunkt 162 sowie einer Echtzeit-Übertragungs-Zeitspanne 160 geredet. Die dargestellten Übertragungsschemta lassen sich auf beispielsweise periodisch sich wiederholende Echtzeit-Übertragungs-Zeiträume 160, jeweils darin enthaltene Übertragungszeitpunkte 162 sowie dabei jeweils versendeten Echtzeit-Nachrichten 150 erweitern, wie es beispielsweise im Rahmen des Profinet-Standards oder ähnlicher Standards vorgesehen ist.

In Fig. 2 ist der Übertragungszeitpunkt 162 als Rechteck dargestellt, wobei die Breite des Rechtecks in Zeitrichtung einem Zeitraum entspricht, welcher dem Übertragungszeitpunkt im Rahmen der technischen Eigenschaften des Geräts, also im Prinzip dessen Genauigkeit, entspricht.

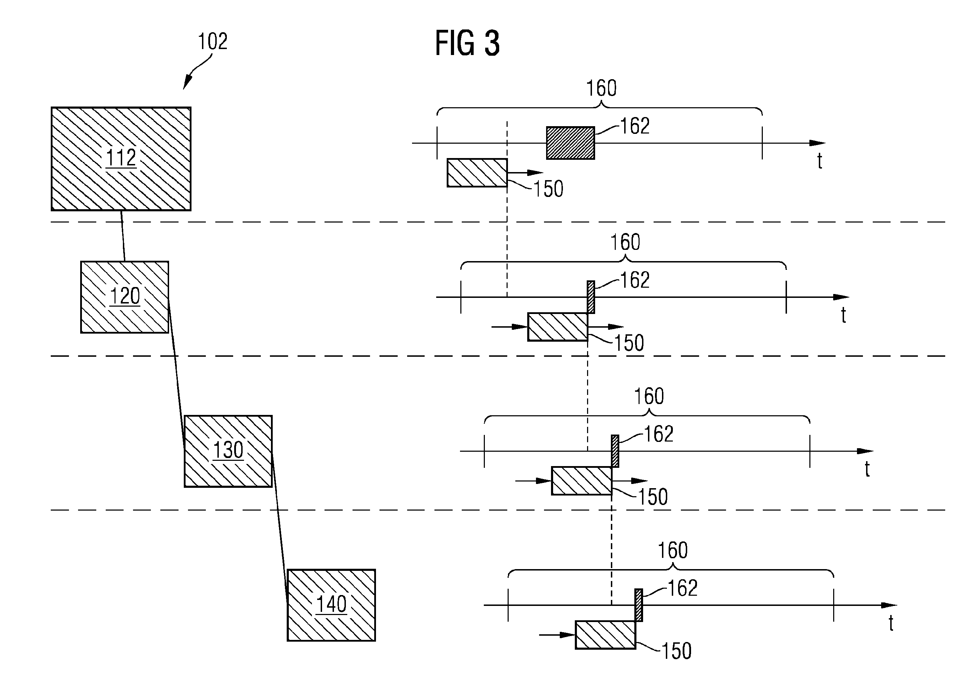

Fig. 3 zeigt das Zeitschema aus Fig. 2 in einem leicht veränderten Feldbusnetz 102, wobei der Controller 110 aus Fig. 2 durch einen zweiten Controller 112 ersetzt wurde, welcher eine technisch einfacher aufgebaute Kommunikations-Hardware und damit auch eine schlechtere Übertragungsgenauigkeit aufweist. Dies ist in Fig. 3 als breiter dargestellter Übertragungs-zeitpunkt 162 dargestellt. Im Rahmen der technischen Genauigkeit des zweiten Controllers 112 lässt sich die Echtzeitnachricht 150 also nur mit einer Ungenauigkeit versenden, die der Breite des dem Übertragungszeitpunkts 162 zugeordneten Rechtecks in Fig. 3 entspricht.

Um dennoch die Echtzeitnachricht 150 so zu versenden, dass ein entsprechend synchronisierter Empfang bei den IO-Devices 120, 130, 140 erfolgt, wird die Echtzeit-Nachricht 150 mit einem in Fig. 3 dargstellten zeitlichen Vorlauf vom zweiten Controller 112 abgesendet. Bei der Kommunikations-Vorbereitung erhielten die IO-Devices 120, 130, 140 weiterhin die Information, dass auch Nachrichten, die zwischen dem Übertragungszeitpunkt und dem Beginn des Echtzeit-Datenübertragungs-Intervalls 160 eintreffen, der definierten Echtzeitübertragung zuzuordnen sind, dass diese, wenn sie vor dem Übertragungszeitpunkt eintreffen, bis zum Übertragungs-zeitpunkt 162 zu speichern sind und erst dann verarbeitet und weitergeleitet werden. Auf diese Weise wird erreicht, dass trotz eines verfrühten Absendens der Echtzeit-Nachricht 150 die enthaltenen Informationen bei den Devices 120, 130, 140, synchron verarbeitet werden, so dass die gesteuerten Devices 120, 130, 140, auch weiterhin synchron arbeiten. Das erste IO-Device 120 synchronisiert dann die Echtzeit-Nachricht 150 quasi in das korrekte Echtzeit-Schema ein.

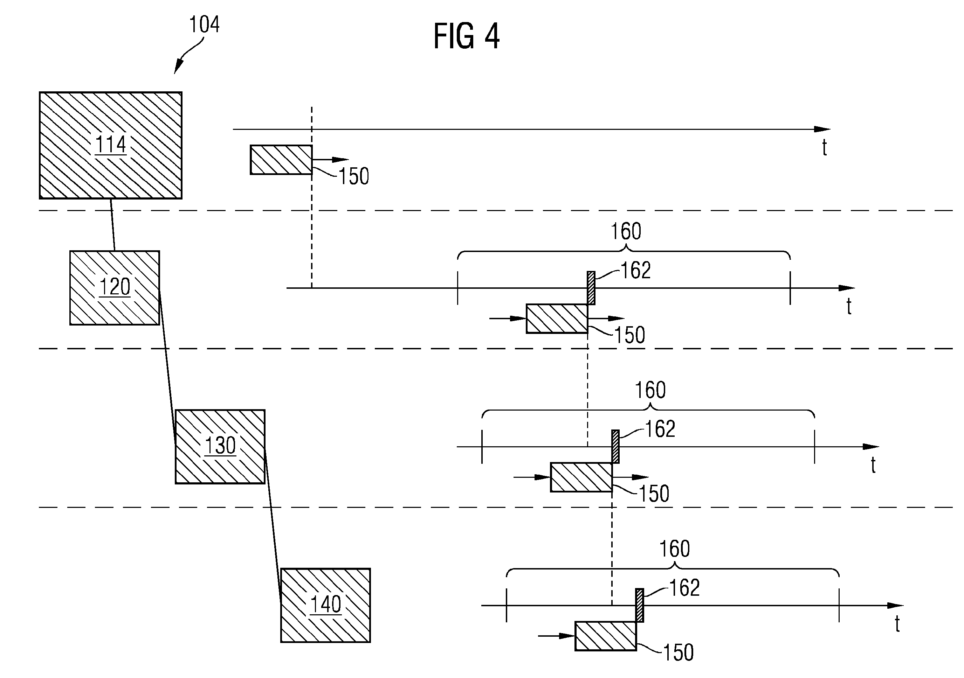

Fig. 4 zeigt ein drittes, wiederum leicht modifiziertes Feldbusnetz 104, wobei gegenüber Fig. 3 der IO-Controller 112 durch einen dritten IO-Controller 114 ersetzt wurde. Dieser dritte Controller 114 ist nicht zur Echtzeitkommunikation ausgestaltet. Daher ist in Fig. 4 im zum dritten Controller 114 zugeordneten Zeitschema auch kein Übertragungszeitpunkt 162 und auch kein Echtzeit-Intervall 160 eingetragen, da dies im dritten Controller 114 nicht identifiziert werden kann. Im Rahmen der Parametrierung der Echtzeitkommunikation kann dann den IO-Devices 120, 130, 140, beispielsweise mitgeteilt werden, dass jede bei ihnen eintreffende Nachricht als Echtzeit-Nachricht zu behandeln ist. Weiterhin kann den IO-Devices 120, 130, 140, auch mitgeteilt werden, dass bei ihnen eintreffende Nachrichten mit einer bestimmten Kennung als Echtzeit-Nachrichten zu handhaben sind. Dann würden die IO-Devices 120, 130, 140, beim Eintreffen einer Nachricht nicht nur den Empfangszeitpunkt sondern auch eine Kennung der Nachricht prüfen.

Fig. 4 zeigt das Absenden der Echtzeitnachricht 150 zu einem beliebigen, außerhalb eines Echtzeit-Übertragungs-Intervalls 160 liegenden Zeitpunkts durch den dritten Controller 114. Das erste IO-Device 120 erkennt beispielsweise anhand einer Kennung der Echtzeit-Nachricht 150 oder anhand einer bei der Initialisierung der Kommunikation vorgegebenen Definition, beispielsweise gemäß den oben stehenden Beispielen, die Nachricht 150 als Echtzeit-Nachricht, und speichert die bis zum Übertragungszeitpunkt 162 zwischen. Beim Erreichen des Übertragungszeitpunkts wird diese wie im Rahmen der vorstehenden Figuren erläutert, verarbeitet und zum zweiten IO-Device 130 weitergeleitet. Das weitere Verfahren mit der Echtzeitnachricht 150 entspricht den in den Fig. 1 bis 3 dargestellten.

Auf diese Weise ist es sogar möglich, mit einem nicht Echtzeit fähigen Controller eine synchrone Ansteuerung mehrerer Empfänger, die jeweils Echtzeit fähig ausgerüstet sind, zu erreichen.

Die vorliegende Erfindung beschreibt ein Verfahren zur Echtzeit-Übertragung von einem Sender zu mehreren Empfängern, wobei durch Zusammenfassung der Informationen zu den verschiedenen Empfängern in einer Nachricht der Übertragungs- und Synchronisationsaufwand bei der Übertragung von Echtzeitdaten innerhalb eines Feldbusnetzes reduziert und vereinfacht werden kann.

## Patentansprüche

1. Verfahren zur Echtzeit-Datenübertragung in einem Kommunikations-Netz (100, 102, 104), insbesondere einem Feldbus-Netz (100, 102, 104), zur Übertragung von Nutzdaten von einem Sender (110, 112, 114) zu mehreren Empfängern (120, 130, 140),
wobei die Empfänger (120, 130, 140) über ein Synchronisierungs-Verfahren zeitsynchronisiert sind,
wobei im Rahmen der Echtzeit-Datenübertragung mindestens ein Übertragungszeitpunkt (162) für jeweils eine Nutzdaten-Nachricht (150) an die Empfänger (120, 130, 140) festgelegt ist,
wobei jedem der Empfänger (120, 130, 140) ein dem Empfänger (120, 130, 140) zugeordneter eigener Empfänger-Nutzdatenbereich (154, 156, 158) innerhalb der Nutzdaten-Nachricht (150) zugeordnet ist, und
wobei der Sender (110, 112, 114) eine Nutzdaten-Nachricht (150) absendet,
ein erster der Empfänger (120) diese Nutzdaten-Nachricht (150) empfängt, die in dem ihm zugeordneten Empfänger-Nutzdatenbereich (154) enthaltenen Nutzdaten zur weiteren Verarbeitung speichert und die Nutzdaten-Nachricht (150) am Übertragungszeitpunkt (162) an einen zweiten der Empfänger (130) weiterleitet.

2. Verfahren nach Anspruch 1,
**dadurch gekennzeichnet,**
**dass** der Sender (110, 112, 114) und die Empfänger(120, 130, 140) zeitsynchronisiert sind und
**dass** der Sender (110, 112, 114) die Nutzdaten-Nachricht (150) innerhalb einer der Echtzeit-Übertragung zugeordneten Zeitspanne absendet.

3. Verfahren nach Anspruch 1 oder 2,
**dadurch gekennzeichnet,**
**dass** jeder der Empfänger (120, 130, 140) die Nutzdaten-Nachricht (150) empfängt, die in dem ihm zugeordneten Empfänger-Nutzdatenbereich (154, 156, 158) enthaltenen Nutzdaten zur weiteren Verarbeitung speichert und die Nutzdaten-Nachricht (150) gegebenenfalls an einen weiteren der Empfänger (130, 140) weiterleitet.

4. Verfahren nach einem der Ansprüche 1 bis 3,
**dadurch gekennzeichnet,**
**dass** mindestens einer der Empfänger (120, 130, 140) einen Empfangszeitpunkt der Nutzdaten-Nachricht (150) bei sich mit dem mindestens einen Übertragungszeitpunkt vergleicht und abhängig vom Ergebnis dieses Vergleichs die in dem ihm zugeordneten Empfänger-Nutzdatenbereich (154, 156, 158) enthaltenen Nutzdaten zur weiteren Verarbeitung speichert.

5. Verfahren nach einem der Ansprüche 1 bis 4,
**dadurch gekennzeichnet,**
**dass** der erste Empfänger (120) einen Empfangszeitpunkt der Nutzdaten-Nachricht (150) bei sich mit dem mindestens einen Übertragungszeitpunkt vergleicht und abhängig vom Ergebnis dieses Vergleichs die in dem ihm zugeordneten Empfänger-Nutzdatenbereich (154) enthaltenen Nutzdaten zur weiteren Verarbeitung speichert und die Nutzdaten-Nachricht (150) am Übertragungszeitpunkt (162) an den zweiten der Empfänger (130) weiterleitet.

6. Verfahren nach einem der Ansprüche 1 bis 5,
**dadurch gekennzeichnet,**
**dass** mehrere Übertragungszeitpunkte (162) für Nutzdaten-Nachrichten (150) an die Empfänger (120, 130, 140) vorgesehen sind und die Übertragungszeitpunkte (162) mit regelmäßigen Zeitabständen aufeinander folgen.

7. Verfahren nach einem der Ansprüche 1 bis 6,
**dadurch gekennzeichnet,**
**dass** mindestens eine Vorbereitungs-Nachrichten an die Empfänger (120, 130, 140) zum Einrichten der Echtzeit-Datenübertragung vorgesehen ist oder gesendet wird, wobei die mindestens eine Vorbereitungs-Nachricht eine Information zu dem mindestens einen Übertragungs-Zeitpunkt für die Nutzdaten-Nachrichten,
und/oder
Informationen über mindestens einen der Empfänger-Nutzdatenbereiche der jeweiligen Empfänger umfasst.

8. Verfahren nach einem der Ansprüche 1 bis 7,
**dadurch gekennzeichnet,**
**dass** die Zeitsynchronisation durch einen der Empfänger (120, 130, 140) gesteuert wird.

9. Verfahren nach einem der Ansprüche 1 bis 8,
**dadurch gekennzeichnet,**
**dass** jedem der mindestens einen Übertragungszeitpunkte ein Echtzeit-Zeitbereich zugeordnet ist, der für die Echtzeit-Datenübertragung vorgesehen ist, wobei weiterhin Datenkommunikation, die nicht Echtzeit-Datenübertragung ist, nur außerhalb dieser Echtzeit-Zeitbereiche erfolgt.

10. Sender (110, 112, 114) zur Verwendung in ein Kommunikations-Netz (100, 102, 104), insbesondere einem Feldbus-Netz (100, 102, 104), zur Übertragung von Nutzdaten zu mehreren Empfängern(120, 130, 140), wobei die Empfänger (120, 130, 140) über ein Synchronisierungsverfahren zeitsynchronisiert sind,
wobei der Sender (110, 112, 114) eine Steuereinrichtung umfasst, die zum Versenden mindestens einer Nutzdaten-Nachricht (150) gemäß einem Verfahren nach einem der Ansprüche 1 bis 9 ausgebildet und eingerichtet ist.

11. Sender nach Anspruch 10,
**dadurch gekennzeichnet,**
**dass** der Sender (110, 112, 114) über ein Synchronisierungs-Verfahren mit den Empfängern (120, 130, 140) zeitsynchronisiert ist und
**dass** der Sender (110, 112, 114) die Nutzdaten-Nachricht (150) innerhalb einer der Echtzeit-Übertragung zugeordneten Zeitspanne absendet.

12. Sender nach Anspruch 10 oder 11,
**dadurch gekennzeichnet,**
**dass** der Sender (110, 112, 114) zum Versenden einer oder mehrerer Vorbereitungs-Nachrichten an die Empfänger (120, 130, 140) zum Einrichten der Echtzeit-Datenübertragung eingerichtet und ausgebildet ist, wobei die eine oder mehreren Vorbereitungs-Nachrichten,
eine Information zu dem mindestens einen Übertragungs-Zeitpunkt für die Nutzdaten-Nachrichten,
und/oder
Informationen über mindestens einen der Empfänger-Nutzdatenbereiche der jeweiligen Empfänger umfasst.

13. Empfänger (120, 130, 140) zur Verwendung in ein Kommunikations-Netz (100, 102, 104), insbesondere einem Feldbus-Netz (100, 102, 104), zum Empfang von Nutzdaten von einem Sender (110, 112, 114) und zur Weiterleitung der Nutzdaten an einen weiteren Empfänger(130, 140), wobei die Empfänger (120, 130, 140) über ein Synchronisierungsverfahren zeitsynchronisiert sind,
wobei der Empfänger (120, 130, 140) eine Steuer- und Speichereinrichtung umfasst, die zum Empfangen, Verarbeiten und Weiterleiten mindestens einer Nutzdaten-Nachricht (150) von dem Sender (110, 112, 114) gemäß einem Verfahren nach einem der Ansprüche 1 bis 9 ausgebildet und eingerichtet ist.

14. Empfänger nach Anspruch 13,
**dadurch gekennzeichnet,**
**dass** die Steuer- und Speichereinrichtung des Empfängers (120, 130, 140)
- zum Empfang der Nutzdaten-Nachricht (150) von dem Sender (110, 112, 114),
- zur Speicherung der in dem ihm zugeordneten Empfänger-Nutzdatenbereich (154, 156, 158) enthaltenen Nutzdaten , und
- zur Weiterleitung der Nutzdaten-Nachricht (150) am Übertragungszeitpunkt (162) an einen weiteren der Empfänger(130, 140),
ausgebildet und eingerichtet ist.

15. Empfänger nach Anspruch 13 oder 14,
**dadurch gekennzeichnet,**
**dass** die Steuer- und Speichereinrichtung des Empfängers (120, 130, 140) eine Vergleichseinrichtung zum Vergleich eines Empfangszeitpunkt der Nutzdaten-Nachricht (150) bei sich mit dem mindestens einen Übertragungszeitpunkt umfasst, und weiterhin und abhängig vom Ergebnis dieses Vergleichs zur Speicherung der in dem ihm zugeordneten Empfänger-Nutzdatenbereich (154, 156, 158) enthaltenen Nutzdaten ausgebildet ist.

16. Empfänger nach Anspruch 15,
**dadurch gekennzeichnet,**
**dass** die Steuer- und Speichereinrichtung des Empfängers (120, 130, 140) abhängig vom Ergebnis dieses Vergleichs zum Weiterleiten der der Nutzdaten-Nachricht (150) an einen weiteren Empfänger (130, 140) ausgebildet und eingerichtet ist.

17. Empfänger nach einem der Ansprüche 13 bis 16,
**dadurch gekennzeichnet,**
**dass** die Steuer- und Speichereinrichtung eine Zeitsynchronisations-Steuereinheit umfasst, welche zur Zeitsynchronisation der Empfänger (120, 130, 140) oder der Empfänger (120, 130, 140) und des Senders (110, 112, 114) eingerichtet und ausgebildet ist.
